# EUROPEAN PATENT SPECIFICATION

(11) **EP 1 570 188 B1**
(45) Date of publication and mention of the grant of the patent: **18.03.2009**
(21) Application number: 03772996.9
(22) Date of filing: 13.11.2003
(51) Int. Cl.: F16D 65/00, F16D 55/00

(54) **DISC BRAKE INCLUDING A PROTECTIVE COVER**
SCHEIBENBREMSE UMFASSEND EINE SCHUTZABDECKUNG
FREIN A DISQUE COMPRENANT UN COUVERCLE DE PROTECTION

(30) Priority: 21.11.2002 SE 0203442
(43) Date of publication of application: 07.09.2005
(73) Proprietor: Scania CV AB (publ), 151 87 Södertälje (SE)
(72) Inventor: SAMUELSSON, Ulf, SE-151 54 Södertalje (SE)
(86) International application number: PCT/SE2003/001748
(87) International publication number: WO 2004/046577

(56) References cited:
- US-A- 3 298 469
- US-A- 3 433 328
- DATABASE WPI Week 199842, Derwent Publications Ltd., London, GB; Class Q63, AN 1998-490233, XP002990415 & JP 10 213 167 A (NISSIN KOGYO KK.) 11 August 1998
- PATENT ABSTRACTS OF JAPAN vol. 13, no. 477 27 October 1989 & JP 11 088 730 A (FUKUZAKI SUSUMU) 28 July 1989

## Description

### Technical field

The present invention relates to a disc brake unit according to the preamble of claim 1, a protective cover unit accommodated in such a disc brake unit and a vehicle comprising such a disc brake unit. Such a disc brake unit is for instance disclosed in US-A-3 433 328.

### State of the art

Disc brakes for road vehicles, and particularly for heavy utility vehicles, suffer from considerable problems due to fouling of disc brake units by dust, water and waterborne pollutants which contaminate, when the vehicle is in motion, both disc brakes and brake yokes with brake linings. This can have consequences in terms of effects on moving parts. Dirt and corrosion may in particular lead to functional impairment causing uneven or impaired braking effect as between different disc brake units.

Moreover, differences in braking action and consequently uneven wear of brake linings may occur on the different sides of a disc if the linings are contaminated to different extents. All in all, in the state of the art, these problems reduce the usability of disc brakes and shorten service intervals, thereby increasing costs. This situation has also led to otherwise less efficient drum brakes being regarded as more reliable and as requiring less servicing.

Various attempts at alleviating the problems of disc brakes have resulted in shaft-mounted protection surrounding the brake disc, but this has entailed problems of impaired cooling, inherent oscillations and extra unsprung weight.

Brake yokes for disc brakes normally have an aperture for the extraction and insertion of brake linings and for inspection of the interior of the brake yoke. With a view to protecting the brake yoke's constituent parts and the brake disc against contamination via this aperture, it has been proposed to insert a protective plate which is integral with the lining holder. However, that solution has not entirely solved the problems of contamination via the extraction aperture, and such a protective plate is troublesome to fit and remove and has therefore hindered accessibility. The position of the protective plate within the aperture close to the brake linings is also regarded as hindering air flow and thereby reducing cooling.

### Objects and most important characteristics of the invention

One object of the present invention is to indicate a disc brake unit including a protective cover unit and a protective cover unit of the kind mentioned in the introduction, whereby the problems of the state of the art are reduced. A particular object is to propose a protective cover unit which functions better and is economic to manufacture and fit.

These objects are achieved in the case of a disc brake unit of the kind mentioned in the introduction by the features in the characterising part of claim 1.

The result is a functional solution which is easy to fit to and remove from the lining holder. The fact that it abuts against an outer surface of the brake yoke prevents the formation of dust accumulation pockets which might entail risk of dirt being led into the aperture.

It should be noted that the space outside the brake yoke is very limited because of proximity to a wheel rim in cases where the brake unit is fitted adjacent to a wheel. However, a main cover according to the invention may, through its connection to the brake yoke, be made so thin and yet stable as not only to perform properly its protective function but also to be clear of a rotating wheel rim.

The invention results in reduced contamination in the region of the brake yoke and hence a more even braking action and more even lining wear, with the overall effects of greater functional reliability and longer service intervals for the brake disc units here concerned.

In the case of a single-mounted wheel it is advantageous that the main cover be supplemented by an outer cover which reduces dirt ingress via the slits in the main cover.

Further advantages arise from further aspects of the invention which are indicated by the following detailed description of embodiments.

### Brief description of the drawings

The attached drawings are as follows:
Fig. 1 depicts schematically a section through a vehicle wheel with a disc brake unit according to the invention,
Fig. 2 depicts parts of the disc brake unit in Fig. 1 in a partly dismantled perspective view,
Fig. 3 depicts a partly dismantled perspective view of an alternative embodiment of a disc brake unit according to the invention,
Fig. 4 depicts a plan view of a main cover,
Fig. 5 depicts a side view of the main cover in Fig. 4 and
Fig. 6 depicts a plan view of an outer cover.

### Description of embodiments

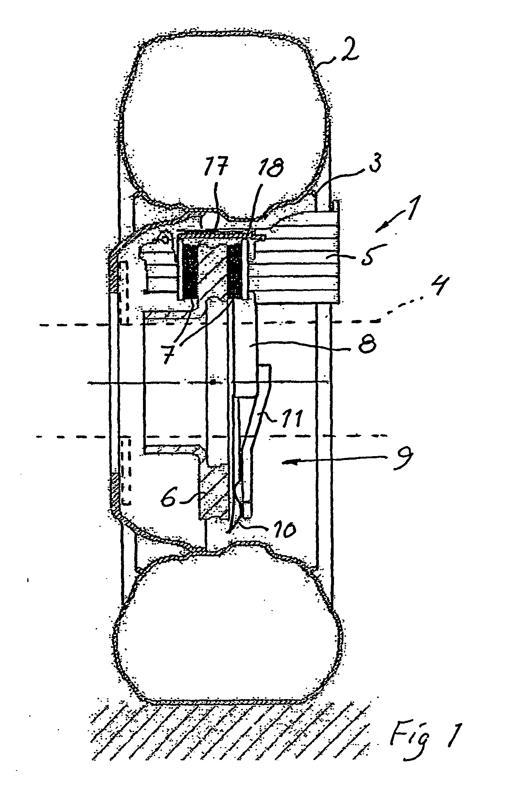

Fig. 1 thus depicts in section a vehicle wheel with a disc brake unit 1 placed within the circumference of a wheel rim 3 which supports a vehicle tyre 2. Broken lines at 4 represent a wheelshaft to which the vehicle wheel is fastened.

The disc brake unit 1 comprises a brake yoke 5, a brake disc 6 fastened to the wheelshaft 4, and brake linings 7 which are arranged on brake blocks and are for braking cooperation with the brake disc 6. The brake yoke 5 comprises brake supports 8 (one depicted) for firm mounting of the brake yoke 5. Each brake support 8 has its lower region lengthened so as to be designed to constitute a fastening point for a protective shield 9 which comprises a protective plate 10 and a fastening bracket portion 11.

A main cover 17 forming part of a protective cover unit according to the invention is fastened to a lining holder 18 in the upper region of the brake yoke 5.

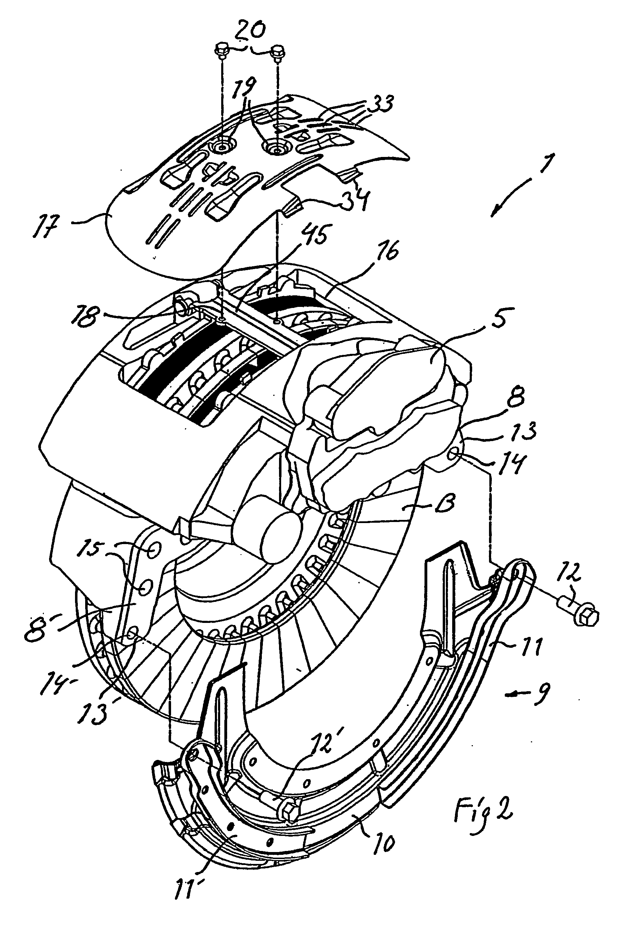

Fig. 2 depicts in perspective the brake yoke 5 with its brake supports 8, 8', each of which is provided with a number of fastening holes 15 (shown in the brake support 8') for accommodating fastening bolts for the brake yoke 5. Ref. B denotes a brake disc

The outer extremity of the free end of each brake support 8, 8' is provided with a fastening eye 13, 13' with respective fastening holes 14, 14' for fastening screws 12, 12' intended to secure a unit comprising the protective plate 10 and fastening brackets 11, 11' by cooperation with holes provided in the free end portions of the fastening brackets 11, 11'. The fastening brackets 11, 11' have a flat U-shaped cross-sectional profile and are curved so that they together substantially describe a circular arc which is at a substantially radially even distance from a wheelshaft when the brake shield is in position.

The contact surface between the protective plate 10 and the fastening brackets 11, 11' is substantially planar.

The radially innermost portion of the protective plate 10 is situated at a distance from the wheelshaft (ref. 4 in Fig. 1) such that a cooling air flow can pass through the resulting gap and proceed radially along the brake disc. The radially outer periphery of the protective plate 10 is drawn somewhat inwards towards the brake disc so as to create a somewhat enclosing structure.

The brake yoke 5 has in its upper portion an open recess 16 via which brake linings are intended to be extracted when they are being changed. The recess 16 is also used for other service operations relating to the disc brake unit, and for inspection purposes.

A lining holder 18 in the form of a supporting U-bolt is placed transversely across the recess so as to extend substantially parallel with the wheelshaft. According to the invention, this lining holder 18 is used for fixing a main cover 17 which is intended to provide dirt protection preventing the ingress of pollutants into the recess 16. To this end, the main cover 17 substantially covers the adjacent outer arcuate section of the brake yoke.

The main cover comprises a thin sheetmetal structure designed to cover said recess. The fastening of the main cover is by fastening cooperation with the lining holder 18 whereby fastening screws 20 are inserted in countersunk recesses 19 with holes running through the main cover 17 and are screwed firmly into the lining holder 18.

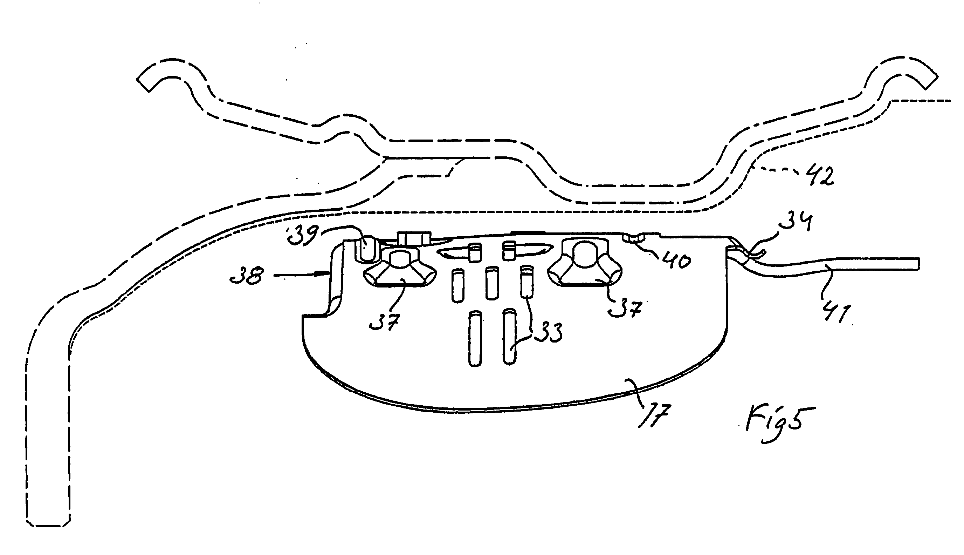

The main cover 17 is also provided with tabs 34 intended to cooperate with and protect indicating cables (see Fig. 5) for indicating the state of wear of the brake linings. These cables take the form of wiring routed from the respective brake linings to the vehicle's control system. This involves a cable from one of the brake linings being routed through a duct in the upper inner region 45 (Fig. 2) of the lining holder and being thus protected from external effects of the main cover 17.

A multiplicity of ventilation slits 33 are arranged in the main cover to allow flow of air which has been used for cooling and which emanates from the region of the disc brake during operation of the vehicle. Cooling of the brake unit is thus promoted despite the presence of the main cover.

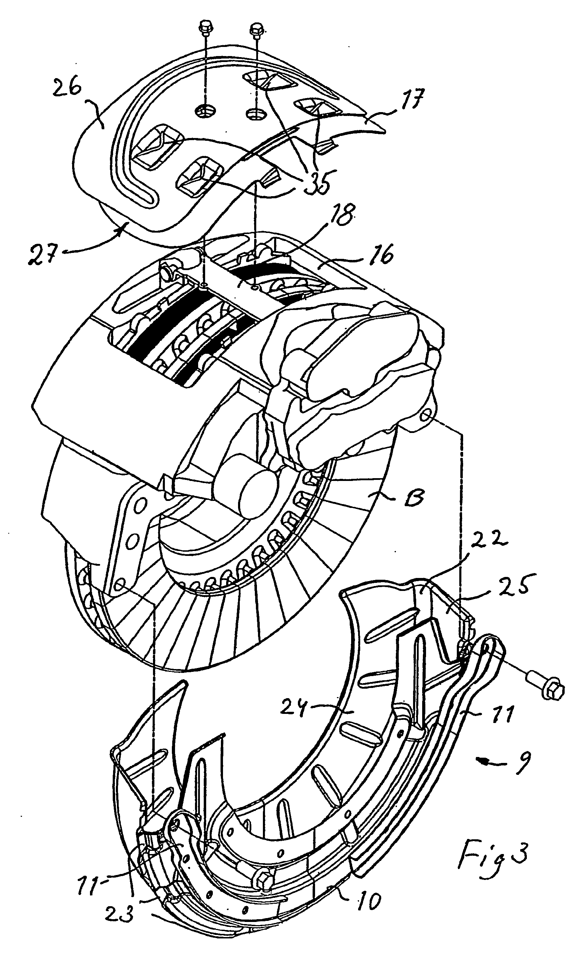

Fig. 3 depicts another embodiment of the invention whereby fastening regions 23 distributed along the peripheral region of the protective plate 10 are used for fastening a protective housing 22. The latter comprises a first portion 24 which runs substantially parallel with the protective plate 10, and a second portion 25 which runs, in a manner surrounding the brake disc, substantially at right angles to the first portion 24 and the protective plate 10. A structure enclosing both sides and the circumference of the brake disc is thus formed.

The fastening regions 23 are matched by corresponding portions of the protective housing 22, and joining together is done, for example, by spot welding or by upset riveting.

Adding the protective housing 22 is applicable in the case of a single-mounted wheel, which means that the brake disc is protected from contamination in all directions, which is otherwise protected by the rim of a vehicle wheel.

In its upper region directed towards the brake yoke 5, the protective housing 22, as also the protective plate 10, is adapted to connecting closely adjacent portions of the brake yoke 5 while leaving a gap for flow of cooling air towards an adjacent wheelshaft (not depicted).

At its upper portion, the brake disc unit in the case of a single-mounted wheel is supplemented by fitting an additional outer cover 26 outside the main cover 17. This outer cover 26 is preferably at a substantially even distance from the main cover 17 so as to leave an air gap 27 between the main cover 17 and the outer cover 26. To this end, the outer cover 26 has a number of spacing portions 35 which help to maintain the continuity of the air gap 27. The spacing portions 35 also serve as regions for joining together the main cover and the outer cover, e.g. by upset riveting.

The object of the outer cover 26 is to protect the disc brake unit 1 from ingress of dirt, water etc. via the slits 33 in the main cover 17 (see Fig. 2). The fastening of the outer cover 26 to a main cover is advantageously effected by the same fastening screws as for the main cover 17 as individual parts of the lining holder 18. Advantageously, both the main cover 17 and the outer cover 26 are manufactured as pressed sheetmetal parts.

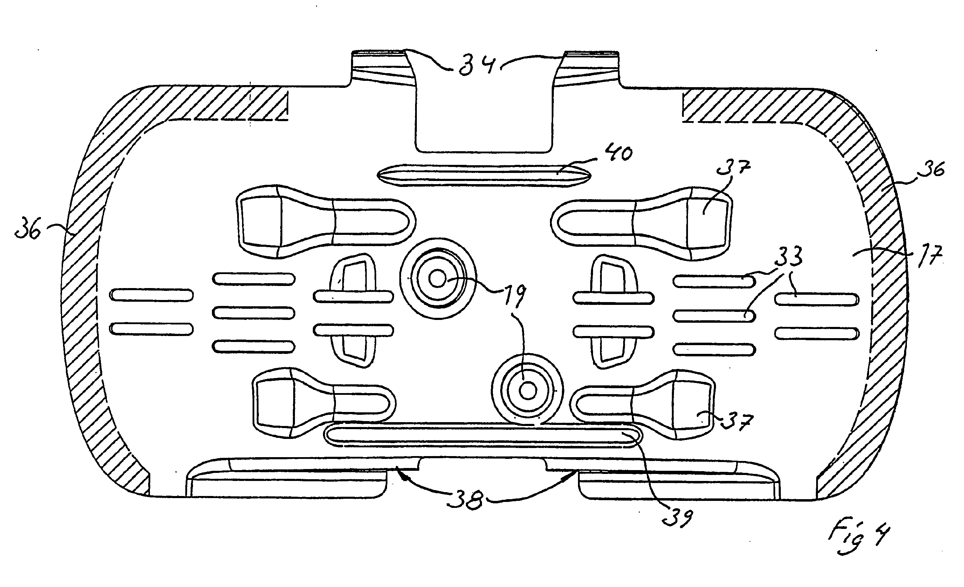

Fig. 4 depicts the main cover 17 in a plan view in which the hatched regions 36 represent the areas where the main cover 17 abuts overlappingly against part of the arcuate, preferably cylindrical, outer surface of the brake yoke, which outer surface partly surrounds the aperture (ref. 16 in Fig.2). Ref. 38 denotes a turned-down sidewall. Reinforcing grooves 39 and 40 are pressed into the main cover and run circumferentially relative to the disc brake unit.

Fig. 5 shows the function of the lateral tabs 34. The routing of an indicating cable 41 from a brake lining is controlled by an inward pressure imparted to it by the lateral tab 34. The cable is thus prevented from moving radially outwards to the region of a rotating wheel rim (represented by ref. 42) which might otherwise damage the cable.

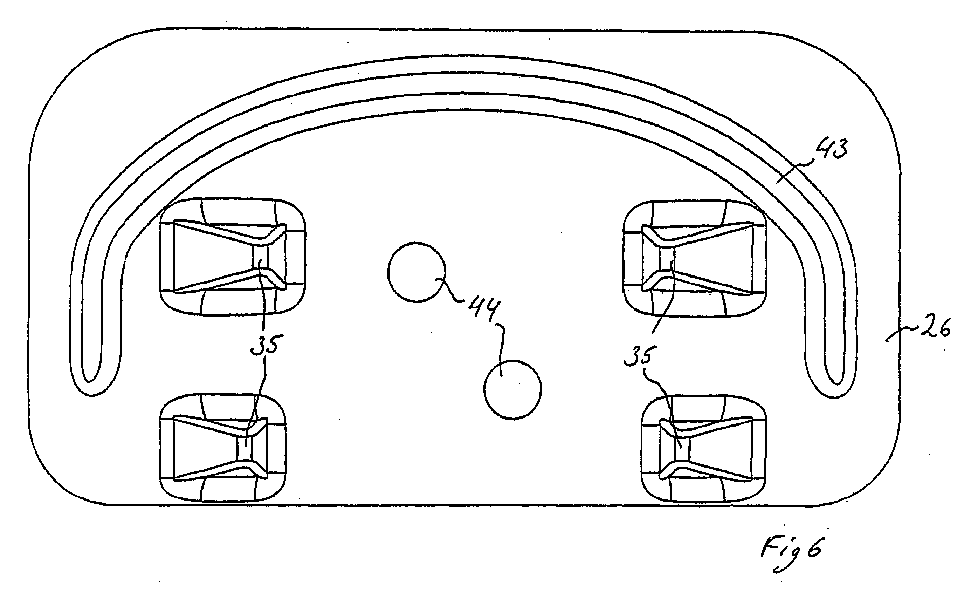

Fig. 6 depicts the outer cover 26 with holes 44 running through it for fitting fastening screws into the main cover. Spacing and joining portions 35 are designed to cooperate with corresponding pressings 37 in the main cover (see Fig. 4) and to be used for joining these parts together, e.g. by upset riveting. A curved reinforcing groove 43 is pressed in the material.

The invention may be modified within the scopes of the ensuing claims whereby the constituent parts may be configured otherwise, e.g. so that there is greater or smaller overlapping of surfaces. The pressings may be configured otherwise, as also the provision of holes.

It is preferable that the protective shield and the protective cover unit be used in combination, but it is not excluded that either may be used without the other.

Applying the invention to a disc brake results in significant improvements as regards service life and function. It also results in more even brake lining wear and consequently longer service intervals between brake lining changes.

## Claims

1. A disc brake unit (1) including brake linings;
a brake yoke (5);
a U-shaped lining holder (18) which is connected to the brake yoke (5);
an aperture (16) in the brake yoke (5) for access to the brake linings;
a protective cover unit (17, 26) for at least partly covering the aperture (16) and blocking access to the brake linings and which is accommodated in the disc brake yoke (5), **characterized in that** the cover unit (17, 26) comprising:
a main cover (17) including fasteners for fastening the main cover (17) to the lining holder (18), the cover (17) runs transversely across the aperture (16), said main cover (17) is shaped to abut (36) against a portion of the brake yoke outer surface which at least partly surrounds the aperture (16), and said main cover (17) is arranged to provide protection for at least one indicating cable (41) for brake lining wear indication.

2. A disc brake unit according to claim 1, **characterized in that** said portion has substantially arcuate geometry.

3. A disc brake unit according to claim 1 or 2, **characterized in that** the main cover (17) includes a multiplicity of slits (33) for flow of air which cools the disc brake.

4. A disc brake unit according to any one of the foregoing claims, **characterized in that** the main cover (17) includes countersunk recesses (19) which are provided with holes to serve as seats for threaded connections (20) running through the holes.

5. A disc brake unit according to any one of the foregoing claims, **characterized in that** the main cover (17) in a selected position on the brake yoke has at least one lateral tab (34) bent inward towards the disc brake centerline, adapted for abutment against the indicating cable.

6. A disk brake unit according to any one of the foregoing claims, **characterized in that** an outer cover (26) fastened to the main cover (17), the covers being so shaped and fastened as to with the form between them a substantially even air gap (27).

7. A disk brake unit according to any one of the foregoing claims, **characterized in that** the main cover and the outer cover (26) each comprise a pressed sheet metal part.

8. A disk brake unit according to claim 7, wherein at least one of the main cover (17) and the outer cover (26) has pressed into it at least one of a spacing means, a reinforcing groove, and a joining surface.

9. A disk brake unit according to any one of claims 6-8, **characterized in that** the outer cover (26) and the inner cover (17) are united by upset riveting.

10. A protective cover unit for at least partly covering an aperture (16) for access to brake linings in a disc brake unit (1) according to any one of the foregoing claims, said cover unit (17, 26) comprising:
a main cover (17) including fasteners for fastening the main cover (17) to the lining holder (18), the cover (17) runs transversely across the aperture (16), said main cover (17) is shaped to abut (36) against a portion of the brake yoke outer surface which at least partly surrounds the aperture (16), and said main cover (17) is arranged to provide protection for at least one indicating cable (41) for brake lining wear indication.

11. A vehicle comprising a disc brake unit (1) according to any one of the claims 1-9.

## Patentansprüche

1. Scheibenbremseneinheit (1) mit
Bremsbelägen;
einem Bremssattel (5);
einem U-förmigen Belaghalter (18), der mit dem Bremssattel (5) verbunden ist;
einer Öffnung (16) in dem Bremssattel (5), die einen Zugang zu den Bremsbelägen ermöglicht;
einer Schutzabdeckungseinheit (17, 26) zum wenigstens teilweisen Abdecken der Öffnung (16) und zum Blockieren des Zugangs zu den Bremsbelägen, wobei die Schutzabdeckungseinheit (17, 26) an den Scheibenbremssattel (5) angepasst ist,
**dadurch gekennzeichnet, dass** die Abdeckungseinheit (17, 26) aufweist:
eine Hauptabdeckung (17), die Befestigungselemente zum Befestigen der Hauptabdeckung (17) an dem Belaghalter (18) aufweist, wobei die Abdeckung (17) quer über die Öffnung (16) verläuft, und wobei die Hauptabdeckung (17) derart ausgebildet ist, dass sie sich an einem Abschnitt einer Außenfläche des Bremssattels abstützt (36), der die Öffnung (16) zumindest teilweise umgibt, und dass die Hauptabdeckung (17) dazu ausgebildet ist, um einen Schutz für wenigstens ein Anzeigekabel (41) zum Anzeigen der Bremsbelagabnutzung bereitzustellen.

2. Scheibenbremseneinheit nach Anspruch 1,
**dadurch gekennzeichnet, dass** der Abschnitt im Wesentlichen eine bogenförmige Geometrie aufweist.

3. Scheibenbremseneinheit nach Anspruch 1 oder 2,
**dadurch gekennzeichnet, dass** die Hauptabdeckung (17) eine Vielzahl von Schlitzen (33) für einen die Scheibenbremse kühlenden Luftstrom aufweist.

4. Scheibenbremseneinheit nach einem der vorangehenden Ansprüche,
**dadurch gekennzeichnet, dass** die Hauptabdeckung (17) gesenkte Vertiefungen (19) umfasst, in denen Löcher vorgesehen sind, die als Sitze für durch die Löcher hindurch laufende Gewindeschrauben (20) dienen.

5. Scheibenbremseneinheit nach einem der vorangehenden Ansprüche,
**dadurch gekennzeichnet, dass** die Hauptabdeckung (17) in einer vorbestimmten Position an dem Bremssattel wenigstens eine seitliche Nase (34) aufweist, die nach innen in Richtung der Bremsscheibenmittellinie gebogen und zum Abstützen des Anzeigekabels angepasst ist.

6. Scheibenbremseneinheit nach einem der vorangehenden Ansprüche,
**dadurch gekennzeichnet, dass** die äußere Abdeckung (26) an der Hauptabdeckung (17) befestigt ist, wobei die Abdeckungen derart geformt und befestigt sind, dass zwischen ihnen ein im Wesentlichen gleichmäßiger Lüftungsspalt (27) entsteht.

7. Scheibenbremseneinheit nach einem der vorangehenden Ansprüche,
**dadurch gekennzeichnet, dass** die Hauptabdeckung und die Außenabdeckung (26) jeweils einen Abschnitt aus gepresstem Blech aufweisen.

8. Scheibenbremseneinheit nach Anspruch 7,
wobei zumindest in die Hauptabdeckung (17) und/oder die Außenabdeckung (26) wenigstens ein Abstandshalter und/oder eine Verstärkungsnut und/oder eine Verbindungsfläche eingepresst ist.

9. Scheibenbremseneinheit nach einem der Ansprüche 6 bis 8,
**dadurch gekennzeichnet, dass** die Außenabdeckung (26) und die Innenabdeckung (17) über gestauchte Nieten verbunden sind.

10. Schutzabdeckungseinheit zum wenigstens teilweise Abdecken einer Öffnung (16), die einen Zugang zu den Bremsbelägen in einer Scheibenbremseneinheit nach einem der vorangehenden Ansprüche bildet, wobei die Abdeckungseinheit (17, 26) aufweist:
eine Hauptabdeckung (17), die Befestigungselemente zum Befestigen der Hauptabdeckung (17) an den Belaghaltern (18) aufweist, wobei die Abdeckung (17) quer über die Öffnung (16) verläuft, und wobei die Hauptabdeckung (17) derart geformt ist, dass sie sich an einem Abschnitt einer Außenfläche des Bremssattelhalters abstützt, die die Öffnung (16) zumindest teilweise umgibt, und dass die Hauptabdeckung (17) angeordnet ist, um einen Schutz für wenigstens ein Anzeigekabel (41) zum Anzeigen einer Abnutzung der Bremsbeläge bereitzustellen.

11. Fahrzeug mit einer Scheibenbremseneinheit nach einem der Ansprüche 1 bis 9.

## Revendications

1. Unité de frein à disque (1) comprenant des garnitures de frein ;
un étrier de frein (5) ;
un support de garnitures en forme de U (18) qui est accouplé à l'étrier de frein (5) ;
une ouverture (16) formée dans l'étrier de frein (5) pour permettre l'accès aux garnitures de frein ;
une unité formant cache de protection (17, 26) pour recouvrir au moins partiellement l'ouverture (16) et bloquer l'accès aux garnitures de frein, et qui est logée dans l'étrier (5) du frein à disque,
**caractérisée en ce que** l'unité formant cache (17, 26) comprend :
un cache principal (17) comprenant des éléments de fixation pour la fixation du cache principal (17) sur le support de garnitures (18), le cache (17) s'étendant transversalement d'un côté à l'autre de l'ouverture (16), ledit cache principal (17) étant façonné de manière à venir en butée (36) contre une portion de la surface extérieure de l'étrier de frein qui entoure au moins partiellement l'ouverture (16), et ledit cache principal (17) est disposé de manière à offrir une protection pour au moins un câble indicateur (41) servant à indiquer l'usure des garnitures de frein.

2. Unité de frein à disque selon la revendication 1, **caractérisée en ce que** ladite portion a une géométrie essentiellement arquée.

3. Unité de frein à disque selon la revendication 1 ou 2, **caractérisée en ce que** le cache principal (17) comprend une pluralité de fentes (33) pour permettre l'écoulement de l'air qui refroidit le frein à disque.

4. Unité de frein à disque selon l'une quelconque des revendications précédentes, **caractérisée en ce que** le cache principal (17) comprend des évidements noyés (19) qui sont pourvus de trous pour servir de sièges pour des raccords filetés (20) s'étendant à travers les trous.

5. Unité de frein à disque selon l'une quelconque des revendications précédentes, **caractérisée en ce que** le cache principal (17), dans une position choisie sur l'étrier de frein, à au moins une patte latérale (34) repliée vers l'intérieur en direction de la ligne médiane du frein à disque, adaptée pour venir en butée contre le câble indicateur.

6. Unité de frein à disque selon l'une quelconque des revendications précédentes, **caractérisée en ce qu'**un cache extérieur (26) est fixé sur le cache principal (17), les caches étant façonnés et fixés l'un à l'autre de façon à former entre eux une lame d'air essentiellement régulière (27).

7. Unité de frein à disque selon l'une quelconque des revendications précédentes, **caractérisée en ce que** le cache principal et le cache extérieur (26) comprennent chacun une partie en tôle métallique emboutie.

8. Unité de frein à disque selon la revendication 7, dans laquelle, dans au moins l'un du cache principal (17) et du cache extérieur (26), sont emboutis au moins l'un d'un moyen d'espacement, d'une rainure de renfort et d'une surface de jonction.

9. Unité de frein à disque selon l'une quelconque des revendications 6 à 8, **caractérisée en ce que** le cache extérieur (26) et le cache intérieur (17) sont solidarisés par une opération de rivetage par refoulement.

10. Unité formant cache de protection pour recouvrir au moins partiellement une ouverture (16) permettant l'accès aux garnitures de frein dans une unité de frein à disque (1) selon l'une quelconque des revendications précédentes, ladite unité formant cache (17, 26) comprenant :
un cache principal (17) comprenant des éléments de fixation pour la fixation du cache principal (17) sur le support de garnitures (18), le cache (17) s'étendant transversalement d'un côté à l'autre de l'ouverture (16), ledit cache principal (17) étant façonné de manière à venir en butée (36) contre une portion de la surface extérieure de l'étrier de frein qui entoure au moins partiellement l'ouverture (16), et ledit cache principal (17) étant disposé de manière à offrir une protection pour au moins un câble indicateur (41) servant à indiquer l'usure des garnitures de frein.

11. véhicule comprenant une unité de frein à disque (1) selon l'une quelconque des revendications 1 à 9.
